# EUROPÄISCHE PATENTSCHRIFT

(11) **EP 4 147 561 B1**
(45) Veröffentlichungstag und Bekanntmachung des Hinweises auf die Patenterteilung: **14.08.2024**
(21) Anmeldenummer: 22180952.8
(22) Anmeldetag: 24.06.2022
(51) Int. Cl.: A01D 41/127, G05D 1/00

(54) **LANDWIRTSCHAFTLICHE ARBEITSMASCHINE SOWIE VERFAHREN ZUR AUSRICHTUNG EINER ZUGEHÖRIGEN ÜBERWACHUNGSEINHEIT**
AGRICULTURAL WORKING MACHINE AND METHOD FOR ALIGNING AN ASSOCIATED MONITORING UNIT
MACHINE DE TRAVAIL AGRICOLE, AINSI QUE PROCÉDÉ D'ALIGNEMENT D'UNE UNITÉ DE SURVEILLANCE ASSOCIÉE

(30) Priorität: 13.09.2021 DE 102021123658
(43) Veröffentlichungstag der Anmeldung: 15.03.2023
(73) Patentinhaber: CLAAS E-Systems GmbH, 49201 Dissen (DE)
(72) Erfinder: Porczek, Sebastian, 33102 Paderborn (DE); Redenius, Jannik, 32361 Pr. Oldendorf (DE); Töniges, Torben, 33602 Bielefeld (DE); Angas, Klaus, 33415 Verl (DE); Bone, Sven, 49124 Georgsmarienhütte (DE); Lücke, Andreas, 33184 Altenbeken (DE); Skiba, Andreas, 33647 Bielefeld (DE)
(74) Vertreter: CLAAS Gruppe

(56) Entgegenhaltungen:
- EP-A1- 1 570 723
- WO-A1-2020/140490
- US-B2- 8 311 696

## Beschreibung

Die vorliegende Anmeldung betrifft eine landwirtschaftliche Arbeitsmaschine gemäß dem Oberbegriff von Anspruch 1. Ferner betrifft die vorliegende Anmeldung ein Verfahren zur Ausrichtung einer Überwachungseinheit einer landwirtschaftlichen Arbeitsmaschine gemäß dem Oberbegriff von Anspruch 10.

Die landwirtschaftliche Arbeitsmaschine umfasst mindestens eine Überwachungseinheit, die insbesondere von einem Sensor oder einer Kamera gebildet sein kann. Mit der Überwachungseinheit können Daten betreffend ein Umfeld und/oder betreffend einen Zustand der landwirtschaftlichen Arbeitsmaschine erfasst werden. Typischerweise wird die landwirtschaftliche Arbeitsmaschine dazu genutzt, ein Feld zu bearbeiten oder abzuernten. Bei dem Umfeld der landwirtschaftlichen Arbeitsmaschine handelt es sich deshalb in aller Regel um das Feld selbst sowie eine daran angrenzende, das Feld begrenzende Umgebung. Bei den Daten betreffend das Umfeld kann es sich insbesondere um Informationen in Bezug auf eine Beschaffenheit oder ein Höhenprofil des von der landwirtschaftlichen Arbeitsmaschine zu überfahrenden Felds handeln. Ebenso können mittels der Überwachungseinheit typischerweise auf dem Feld befindliche Gegenstände und Hindernisse erkannt werden. Bei den Daten betreffend einen Zustand der landwirtschaftlichen Arbeitsmaschine kann es sich insbesondere um einen Reifendruck, eine Ballastierung, einen Beladungszustand, die von der landwirtschaftlichen Arbeitsmaschine zu verrichtende Zugarbeit, die Geschwindigkeit oder ein Neigungswinkel der landwirtschaftlichen Arbeitsmaschine handeln. Im Wesentlichen können alle, die Ausrichtung der landwirtschaftlichen Arbeitsmaschine betreffende Informationen herangezogen werden.

Weiterhin umfasst die landwirtschaftliche Arbeitsmaschine mindestens eine der Überwachungseinheit zugeordnete Halteeinheit zur Halterung der Überwachungseinheit. Dabei ist die Überwachungseinheit typischerweise an einer Vorderseite der landwirtschaftlichen Arbeitsmaschine angeordnet, sodass die unmittelbar vor der Arbeitsmaschine liegende Umgebung erfasst werden kann. Ebenso kann die Überwachungseinheit an jeder anderen Position der landwirtschaftlichen Arbeitsmaschine oder an einem Vorsatzgerät der landwirtschaftlichen Arbeitsmaschine angeordnet sein. Unterschiedliche Anbaupositionen von Überwachungseinheiten rund um die landwirtschaftliche Arbeitsmaschine haben dabei situationsbedingte Vor- und Nachteile gegenüber anderen Anbaupositionen. So werden Überwachungseinheiten in Form von Spursensoren typischerweise an einer Schneidwerksseite der Arbeitsmaschine angeordnet.

Ferner umfasst die landwirtschaftliche Arbeitsmaschine mindestens eine Datenverarbeitungseinheit. Mit der Datenverarbeitungseinheit können die von der Überwachungseinheit erfassten Daten verarbeitet werden. Beispielsweise können die Daten zur Erstellung eines Höhenprofils des Felds herangezogen werden. Schließlich umfasst die landwirtschaftliche Arbeitsmaschine mindestens eine der Überwachungseinheit zugeordnete Positionierungseinheit, mittels der die Überwachungseinheit ausrichtbar ist.

Landwirtschaftliche Arbeitsmaschinen der vorstehend beschriebenen Art sind im Stand der Technik bereits bekannt. Hierzu wird beispielhaft auf das US-Patent US 8,311,696 B2 verwiesen, dem ein Fahrzeugkontrollsystem für eine landwirtschaftliche Arbeitsmaschine zu entnehmen ist, das eine autonome Steuerung vorsieht. Das Fahrzeugkontrollsystem umfasst ein computerbasiertes System, das einen Vergleich zwischen der tatsächlichen Position der zu steuernden Arbeitsmaschine und einer gewünschten Position vornimmt. Ferner umfasst das Fahrzeugkontrollsystem eine Steuerungseinheit zur Steuerung der Arbeitsmaschine zu der gewünschten Position. Die tatsächliche Position der Arbeitsmaschine sowie wie weitere Zustandsparameter der Arbeitsmaschine - wie eine Geschwindigkeit der Arbeitsmaschine - werden dabei mittels Überwachungseinheiten in Form von Trägheitssensoren, insbesondere Beschleunigungssensoren und Gyroskopen, bestimmt. Da diese jedoch zu zeitveränderlichen Fehlern neigen, ist vorgesehen, darüber hinaus optische Überwachungseinheiten in Form von Bewegungssensoren zu nutzen, die den zu befahrenden Untergrund während der Fahrt der Arbeitsmaschine erfassen. Diese sollen zur Korrektur der mittels der Trägheitssensoren erfassten Daten genutzt werden. Dabei ist ebenfalls vorgesehen, die optischen Bewegungssensoren - ähnlich wie einen Kompass - mittels einer kardanischen Aufhängung, auch "Gimbal" genannt, zu lagern und somit sicherzustellen, dass die Bewegungssensoren dynamisch gelagert sind, sodass zumindest deren Ausrichtung entlang einer Z-Achse der Arbeitsmaschine erhalten bleibt, auch wenn die Orientierung der Arbeitsmaschine sich entlang der Z-Achse während der Fahrt verändert. Auch soll die Aufhängung genutzt werden, um die Orientierung der Arbeitsmaschine zu bestimmen und ebenfalls in die Steuerung einfließen zu lassen.

Auch in der Patentanmeldung WO 2020/140490 A1 wird eine landwirtschaftliche Arbeitsmaschine in Form eines Mähdreschers beschrieben, der eine Überwachungseinheit in Form einer Kamera umfasst, die die Umgebung um den Mähdrescher erfasst, um Einstellungen des Mähdreschers an die zu erntende Umgebung anzupassen und somit insbesondere ein autonomes Fahren des Mähdreschers zu ermöglichen. Um die Nachteile der aus dem Stand der Technik zu beheben, ist vorgesehen, dass die Kamera kardanisch aufgehängt ist, sodass Vibrationen des Mähdreschers keinen Einfluss auf eine Qualität von mittels der Kamera aufgenommenen Fotos haben. Hierzu soll die Kamera nach oben und unten sowie nach links und rechts rotierbar an dem Mähdrescher gelagert sein.

Nachteilig an dem vorstehend beschriebenen Stand der Technik ist, dass die Überwachungseinheiten zwar über eine kardanische Aufhängung gelagert sind, sodass eine automatische Ausrichtung der Überwachungseinheiten erfolgen kann, gewisse infolge einer Beschaffenheit des von der Arbeitsmaschine überfahrenden Felds hervorgerufene Bewegungen der landwirtschaftlichen Arbeitsmaschine, die sich unmittelbar auf die Überwachungseinheiten übertragen, dabei nicht ausgeglichen werden können.

Es ist daher Aufgabe der vorliegenden Erfindung, die Nachteile des Stands der Technik zu beseitigen und eine landwirtschaftliche Arbeitsmaschine bereit zu stellen, die eine verbesserte an das Umfeld angepasste Ausrichtung der Überwachungseinheit ermöglicht.

Diese Aufgabe wird durch eine landwirtschaftliche Arbeitsmaschine gemäß dem Anspruch 1 sowie Verfahren zur Ausrichtung einer Überwachungseinheit einer landwirtschaftlichen Arbeitsmaschine gemäß Anspruch 10 gelöst. Vorteilhafte Ausgestaltungen der Erfindung sind Gegenstand der Unteransprüche.

Erfindungsgemäß ist vorgesehen, dass mittels der Datenverarbeitungseinheit in Abhängigkeit der mittels der Überwachungseinheit erfassten Daten betreffend das Umfeld und/oder betreffend einen Zustand der landwirtschaftlichen Arbeitsmaschine eine Soll-Position der Überwachungseinheit bestimmbar ist, wobei die Überwachungseinheit mittels der Positioniereinheit derart ausrichtbar ist, dass sie von einer Ist-Position in die Soll-Position überführbar ist.

Dabei wird unter einer "landwirtschaftlichen Arbeitsmaschine" im Sinne der vorliegenden Erfindung eine Arbeitsmaschine verstanden, die im Bereich der Landwirtschaft eingesetzt werden kann. Insbesondere als landwirtschaftliche Arbeitsmaschinen im Sinne der vorliegenden Erfindung sind Traktoren, Mähdrescher, Ballenpressen, Dünge- oder Erntegeräte sowie weitere, im Bereich der Landwirtschaft zur Bearbeitung von Feldern eingesetzte Arbeitsmaschinen zu verstehen.

Unter einer "Ist-Position" der Überwachungseinheit der landwirtschaftlichen Arbeitsmaschine wird im Sinne der vorliegenden Erfindung eine Position der Überwachungseinheit verstanden, in der sie sich zum aktuell zu beurteilenden Zeitpunkt befindet. Vorzugsweise kann die Ist-Position der Überwachungseinheit relativ zu der Arbeitsmaschine bestimmt werden.

Unter einer "Soll-Position" der Überwachungseinheit der landwirtschaftlichen Arbeitsmaschine wird im Sinne der vorliegenden Erfindung eine Position der Überwachungseinheit verstanden, in die sie nach Erfassung der Daten betreffend die Umgebung und/oder betreffend den Zustand der Arbeitsmaschine, überführt werden soll. Auch die Soll-Position kann dabei vorzugsweise relativ zu der Arbeitsmaschine bestimmt werden.

Die erfindungsgemäße landwirtschaftliche Arbeitsmaschine hat viele Vorteile. Insbesondere ermöglicht die landwirtschaftliche Arbeitsmaschine eine Ausrichtung der Überwachungseinheit in Abhängigkeit des Umfelds und/oder des Zustands der landwirtschaftlichen Arbeitsmaschine. Dabei wird mittels der Überführung der Überwachungseinheit von ihrer Ist-Position in ihre Soll-Position in Abhängigkeit der von der Überwachungseinheit gesichteten Umgebung und/oder des derzeitigen Zustands der landwirtschaftlichen Arbeitsmaschine sichergestellt, dass die Überwachungseinheit stets derart ausgerichtet ist, dass die Umgebung optimal erfasst werden kann. Dies ist insbesondere dann von Vorteil, wenn die landwirtschaftliche Arbeitsmaschine autonom betreibbar ausgestaltet ist. In einem solchen Fall erfolgt eine Lenkung und/oder. eine Anpassung einer Geschwindigkeit der landwirtschaftlichen Arbeitsmaschine ohne - oder mit lediglich geringer - Einflussnahme einer die Arbeitsmaschine bedienenden Person. Sofern in diesem Fall eine Anpassung der Ausrichtung der Überwachungseinrichtung erfolgen kann, kann eine Sicherheit der Entscheidungen betreffend die Lenkung und/oder die Geschwindigkeit der Arbeitsmaschine verbessert werden, insbesondere da verhindert werden kann, dass die Überwachungseinheit beispielsweise infolge einer Überfahrt über eine Bodenwelle derart ausgerichtet ist, dass die Umgebung kurzzeitig nicht vollständig erfasst werden kann. Vielmehr ist mittels der erfindungsgemäßen Arbeitsmaschine in einem derartigen Fall zuvor eine Soll-Position für die Überfahrt bestimmbar, sodass die Überwachungseinheit von Ihrer Ist-Position mittels der Positioniereinheit zum Zeitpunkt der Überfahrt über die Bodenwelle in die Soll-Position überführbar ist. Mit anderen Worten erfolgt eine Anpassung der Ausrichtung der Überwachungseinheit, die wiederum selbst das Umfeld erfasst, in Abhängigkeit des Umfelds, sodass eine Anpassung der Ausrichtung bei einer Veränderung des Umfelds ermöglicht wird. Im Gegensatz zum Stand der Technik ist somit eine Soll-Position der Überwachungseinheit bestimmbar, bevor die landwirtschaftliche Arbeitsmaschine aufgrund der Beschaffenheit der Umgebung derart bewegt wird, dass eine ungewollte Bewegung der Überwachungseinheit erfolgt.

Ebenso ist jedoch auch vorstellbar, dass die Daten betreffend die Umgebung der landwirtschaftlichen Arbeitsmaschine bereits bekannt sind. Dies ist insbesondere dann denkbar, wenn die landwirtschaftliche Arbeitsmaschine eine bereits von derselben oder einer anderen landwirtschaftlichen Arbeitsmaschine abgefahrenen Route nimmt, die mittels einer Überwachungseinheit bereits erfasst wurde. In diesem Fall können die erfassten Daten wiederverwendet werden. Dabei können zusätzlich Daten betreffend den Zustand der landwirtschaftlichen Arbeitsmaschine, insbesondere also ein Reifendruck, eine Ballastierung, ein Beladungszustand, die von der landwirtschaftlichen Arbeitsmaschine zu verrichtende Zugarbeit, die Geschwindigkeit oder ein Neigungswinkel der landwirtschaftlichen Arbeitsmaschine, hinzugezogen werden.

Gemäß einer vorzugsweisen Ausgestaltung der Erfindung ist vorgesehen, dass die Überwachungseinheit einen Lidarsensor, einen Radarsensor, einen Ultraschallsensor und/oder eine Kamera umfasst. Diese Arten von Überwachungseinheiten haben sich als besonders vorteilhaft erwiesen, die Umgebung der landwirtschaftlichen Arbeitsmaschine zu erfassen. Ebenso sind jedoch auch andere Überwachungseinheiten denkbar, sofern mit Ihnen die Umgebung und/oder ein Zustand der landwirtschaftlichen Arbeitsmaschine erfassbar ist. Insbesondere soll die Überwachungseinheit dazu geeignet sein, eine Beschaffenheit eines von der landwirtschaftlichen Arbeitsmaschine zu überfahrenden Untergrunds, typischerweise eines Felds, zu bestimmen und/oder Daten zu dem derzeitigen Zustand der landwirtschaftlichen Arbeitsmaschine zu erfassen. Hierbei kann insbesondere ein Höhenprofil des Felds von Interesse sein. Ebenso soll die Überwachungseinheit in der Lage sein, Hindernisse in der Umgebung der landwirtschaftlichen Arbeitsmaschine zu detektieren, um - sofern die landwirtschaftliche Arbeitsmaschine zumindest teilweise autonom betrieben werden soll - ein Ausweichen der Arbeitsmaschine zu ermöglichen und eine Kollision mit den Hindernissen zu verhindern. Ebenso ist aber auch vorstellbar, dass bestimmte, für eine optimale Düngung erforderliche Daten betreffend den Untergrund mittels der Überwachungseinheit bestimmbar sind. Auch ist denkbar, mehrere Überwachungseinheiten an der landwirtschaftlichen Arbeitsmaschine vorzusehen, sodass verschiedene der vorstehend ausgezählten Informationen über die Umgebung erfassbar und bei der Bestimmung der Soll-Position der Überwachungseinheit nutzbar sind.

Eine weitere vorzugsweise Ausgestaltung der Erfindung sieht vor, dass die Positioniereinheit eine kardanische Aufhängung umfasst. Unter einer" kardanischen Aufhängung" wird im Sinne der vorliegenden Erfindung eine Aufhängung eines Gegenstands mittels mindestens zwei sich schneidender zueinander rechtwinklig angeordneter Drehlager verstanden. Typischerweise handelt es sich bei den Drehlagern um drehbar gelagerte Ringe. Ebenso sind jedoch auch motorisierte kardanische Aufhängungen bekannt, bei denen die Ausrichtung des zu lagernden Gegenstands mittels drei bürstenloser Motoren erfolgt, die auf Basis von mittels einer inertialen Messeinheit (kurz: IMU) gelieferten Daten gesteuert werden. Typischerweise werden derartige Aufhängungen im Bereich der Kameraführung eingesetzt. In jedem Fall wird mittels einer kardanischen Aufhängung - motorisiert oder unmotorisiert - eine Stabilisierung der Lage des Gegenstands bewirkt, sodass aufgrund von äußeren Kräften erzeugte ungewollte Bewegungen ausgeglichen werden können, um den Gegenstand zu stabilisieren. In Bezug auf die vorliegende Erfindung ist es besonders von Vorteil, wenn die Überwachungseinheit mittels der Positioniereinheit derart ausrichtbar ist, dass Bewegungen der landwirtschaftlichen Arbeitsmaschine, die typischerweise infolge eines unebenen Untergrunds hervorgerufen werden, möglichst wenig Einfluss auf die Ausrichtung der Überwachungseinheit haben.

Gemäß einer vorzugsweisen Ausgestaltung ist vorgesehen, dass die Überwachungseinheit mittels der Positioniereinheit entlang mindestens einer Raumachse bewegbar ist. Bei einer Raumachsen handelt es sich um eine Achse im freien Raum. Vorzugsweise ist dabei vorgesehen, dass die Überwachungseinheit translatorisch entlang einer Raumachse bewegbar ist. Dabei kann es besonders von Vorteil sein, wenn die Überwachungseinheit entlang mindestens einer Achse der landwirtschaftlichen Arbeitsmaschine bewegbar ist. Auch kann vorgesehen sein, dass die Überwachungseinheit lediglich entlang einzelner Achsen der Arbeitsmaschine ausrichtbar ist, beispielsweise entlang einer Z-Achse der landwirtschaftlichen Arbeitsmaschine, die im Sinne der vorliegenden Erfindung als eine senkrecht zu einer Längsachse der landwirtschaftlichen Arbeitsmaschine verlaufende Achse zu verstehen ist, die auch zur Definition einer Höhe relativ zu dem Untergrund herangezogen wird. Besonders von Vorteil kann dabei eine translatorische Verschiebung der Überwachungseinheit entlang der Z-Achse sein, insbesondere bei einer Veränderung einer Bestandshöhe eines ungemähten Abschnitts des Felds oder einer Bestandskante, also einer Kante zwischen gemähtem und ungemähtem Feld, oder auch beim Überfahren eines Stoppelfelds.

Eine weitere vorzugsweise Ausgestaltung der Erfindung sieht vor, dass die Überwachungseinheit mittels der Positioniereinheit um mindestens eine Raumachse rotierbar ist. Auf diese Weise können beispielsweise infolge von Unebenheiten auf dem Untergrund hervorgerufene Wippbewegungen der landwirtschaftlichen Arbeitsmaschine ausgeglichen werden.

Eine besonders vorzugsweise Ausgestaltung der Erfindung sieht ferner vor, dass die Überwachungseinheit in all ihren Freiheitsgraden ausrichtbar ist. Unter "Freiheitsgraden" im Sinn der vorliegenden Erfindung wird dabei jede voneinander unabhängige Bewegungsmöglichkeit verstanden. Im vorliegenden Fall weist die landwirtschaftliche Arbeitsmaschine sechs Freiheitsgrade auf, in die die landwirtschaftliche Arbeitsmaschine bewegt werden kann, ohne dass sich die anderen Parameter verändern. Dabei sind die Freiheitsgrade durch drei unabhängige Bewegungsrichtungen (Translation) und drei unabhängige Rotationsachsen (Rotation) bestimmt. Die im Bereich von Fahrzeugen typischerweise verwendeten Begriffe hinsichtlich der translatorischen Verschiebung lauten dabei: vor ("forward") und zurück ("back"), herauf ("up") und herunter ("down") sowie links ("left") und rechts ("righth"). Die Rotationsbewegung und die entsprechenden Rotationswinkel werden als Gieren ("yaw-Winkel"), Nicken ("pitch-Winkel") und Rollen ("roll-Winkel") bezeichnet, wobei beim Gieren eine Rotation um die durch die Bewegungsrichtungen herauf und herunter definierte Achse, beim Nicken eine Rotation um die durch die Bewegungsrichtungen links und rechts definierte Achse und beim Rollen um die durch die Bewegungsrichtungen vor und zurück definierte Rotationsachse erfolgt. Infolge einer Möglichkeit zur Ausrichtung in all die Freiheitsgrade der Arbeitsmaschine können in besonders vorteilhafter Weise alle durch die Bewegungen der landwirtschaftlichen Arbeitsmaschine hervorgerufenen ungewollten Bewegungen der Überwachungseinheit ausgeglichen werden, sodass die Überwachungseinheit stets derart ausrichtbar ist, dass ein Sichtfeld der Überwachungseinheit die Umgebung der Arbeitsmaschine sicher erfassen kann.

Beispielsweise kann es besonders von Vorteil sein, die Überwachungseinheit um den Pitch-Winkel der landwirtschaftlichen Arbeitsmaschine zu rotieren, wenn sich eine Höhe der Überwachungseinheit relativ zu dem Untergrund ändert. Eine solche Situation kann insbesondere dann eintreten, wenn sich ein Reifendruck der landwirtschaftlichen Arbeitsmaschine ändert, die Ballastierung erhöht wird oder die landwirtschaftliche Arbeitsmaschine eine erhöhte Zugarbeit verrichten muss. Auch beim Überfahren einer auf dem Untergrund vorhandenen Furche kann es besonders von Vorteil sein, eine Rotation der Überwachungseinheit um den Roll-Winkel der landwirtschaftlichen Arbeitsmaschine vorzunehmen, um die Überwachungseinheit wieder parallel zu dem Untergrund ausrichten zu können. Eine Anpassung des Yaw-Winkels der Überwachungseinheit kann insbesondere dann zweckmäßig sein, wenn eine Veränderung eines Lenkwinkels der landwirtschaftlichen Arbeitsmaschine erfolgt, die Arbeitsmaschine also um eine Kurve gelenkt wird. Auf diese Weise können vorteilhafter Weise normalerweise "tote" Bereiche von der Überwachungseinheit dennoch erfasst werden. Auch eine Anpassung des Pitch-Winkels der landwirtschaftlichen Arbeitsmaschine kann sinnvoll sein, insbesondere bei einer Veränderung der Geschwindigkeit der landwirtschaftlichen Arbeitsmaschine. Bei geringen Geschwindigkeiten reicht es typischerweise aus, nur das Umfeld kurz vor der landwirtschaftlichen Arbeitsmaschine zu beobachten. Bei höheren Geschwindigkeiten muss allerdings ein weiteres Umfeld beobachtet werden. Die Überwachungseinheit kann dabei so ausgerichtet werden, dass beispielsweise bei einer als Kamera ausgebildeten Überwachungseinheit der untere Bildrand, oder bei einer als Lidar-Sensor ausgebildeten Überwachungseinheit die unterste Scanebene immer den gleichen Abstand zur landwirtschaftlichen Arbeitsmaschine aufweist bzw. dieser Abstand einstellbar ist. Dabei kann es besonders vorteilhaft sein, vor Fahrtbeginn das direkte Umfeld der landwirtschaftlichen Arbeitsmaschine zu beobachten, um sicherzustellen, dass dieses frei ist. Sobald dies sichergestellt ist und die landwirtschaftliche Arbeitsmaschine in Bewegung versetzt wird, kann die Überwachungseinheit derart ausgerichtet werden, dass diese ein größeres Umfeld beobachten kann.

Es ist gemäß einer weiteren vorzugsweisen Ausgestaltung der Erfindung vorgesehen, dass die Positioniereinheit mindestens einen Servomotor und/oder mindestens eine Zahnstange umfasst. Dabei kann der Servomotor und/oder die Zahnstange vorteilhafter Weise dazu genutzt werden, die Überwachungseinheit auszurichten. Beispielsweise kann die Überwachungseinheit mittels der Positioniereinheit entlang einer Z-Achse der landwirtschaftlichen Arbeitsmaschine, also in ihrer Höhe relativ zu der Arbeitsmaschine, ausgerichtet werden. Ebenso kann ein Servomotor und/oder eine Zahnstange aber auch dazu genutzt werden, um die Überwachungseinheit entlang oder um jede andere beliebige Raumachse zu verschieben bzw. zu rotieren.

Eine weitere Ausgestaltung der Erfindung sieht vor, dass die Überwachungseinheit während einer Fahrtbewegung der landwirtschaftlichen Arbeitsmaschine ausrichtbar ist. Somit kann die Überwachungseinheit in Abhängigkeit einer Beschaffenheit des derzeitig von der landwirtschaftlichen Arbeitsmaschine überfahrenden Untergrunds ausgerichtet werden.

Eine weitere vorzugsweise Ausgestaltung der Erfindung sieht eine Lenkeinheit vor, mittels der die landwirtschaftliche Arbeitsmaschine in Abhängigkeit der von der Überwachungseinheit erfasster Daten autonom steuerbar ist. Dabei ist vorstellbar, dass die landwirtschaftliche Arbeitsmaschine vollständig autonom betreibbar ist. Ebenso ist denkbar, dass die Überwachungseinheit unterstützend zu einer die Arbeitsmaschine fahrenden Person genutzt wird, um der Person bestimmte Informationen hinsichtlich der Umgebung oder dem Untergrund liefern zu können. In jedem Fall ist die Lenkeinheit dazu hergerichtet, die Arbeitsmaschine auf Basis der Daten, die von der Überwachungseinheit erfasst werden, über das zu bearbeitende Feld zu steuern. Insbesondere kann hierbei berücksichtigt werden, ob sich Hindernisse auf dem Feld befinden. Auch kann mittels der Datenverarbeitungseinheit ein optimaler Fahrweg der Arbeitsmaschine bestimmt werden. Ebenso ist es denkbar, dass sich die Arbeitsmaschine somit besonders einfach bzw. selbstgesteuert entlang einer Bestandskante führen lässt. Insbesondere, wenn bestehende Daten betreffend die Umgebung der landwirtschaftlichen Arbeitsmaschine vorliegen, können diese zur Ansteuerung der landwirtschaftlichen Arbeitsmaschine herangezogen werden.

Die zugrunde liegende Aufgabe wird ferner verfahrenstechnisch mittels eines Verfahrens zur Ausrichtung einer Überwachungseinheit einer landwirtschaftlichen Arbeitsmaschine mit den Merkmalen des Anspruchs 10 gelöst. Das erfindungsgemäße Verfahren umfasst dabei die folgenden Verfahrensschritte: in einem ersten Schritt werden Daten betreffend ein Umfeld und/oder betreffend einen Zustand der landwirtschaftlichen Arbeitsmaschine von einer Überwachungseinheit erfasst. In einem nächsten Schritt werden die Daten an eine Datenverarbeitungseinheit übermittelt.

Das erfindungsgemäße Verfahren ist dabei durch folgende Verfahrensschritte gekennzeichnet: In Abhängigkeit der Daten wird mittels der Datenverarbeitungseinheit eine Soll-Position der Überwachungseinheit bestimmt. In einem anschließenden Verfahrensschritt wird die Überwachungseinheit dann mittels einer Positionierungseinheit von einer Ist-Position in die Soll-Position überführt. Die in Bezug auf die landwirtschaftliche Arbeitsmaschine genannten Vorteile werden dabei analog mit dem erfindungsgemäßen Verfahren erzielt.

Die Daten betreffend das Umfeld und/oder den Zustand der landwirtschaftlichen Arbeitsmaschine können dabei schon im Vorfeld von einer Überwachungseinheit einer anderen oder derselben landwirtschaftlichen Arbeitsmaschine erfasst worden sein. Mit anderen Worten muss es sich nicht um diejenige landwirtschaftliche Arbeitsmaschine handeln, deren Überwachungseinheit nunmehr ausgerichtet werden soll. So ist insbesondere vorstellbar, dass es sich um die Daten einer bereits bekannten Route handelt, die bereits erfasst worden sind und nunmehr als Dateninput dienen können. Zusätzlich können in einem solchen Fall Daten betreffend den Zustand der landwirtschaftlichen Arbeitsmaschine hinzugezogen werden, die mittels der Überwachungseinheit erfasst werden. Eine Kombination der Daten ermöglicht dann eine besonders genaue Bestimmung der Soll-Position der Überwachungseinheit.

Eine vorzugsweise Ausgestaltung der Erfindung sieht ferner einen Kalibrierungsschritt vor, mittels dessen die Überwachungseinheit vor einem Fahrtbeginn der landwirtschaftlichen Arbeitsmaschine kalibriert wird. Mittels des Kalibrierungsschritts kann die Ausrichtung der Überwachungseinheit unter Berücksichtigung des zu überfahrenden Felds angepasst werden. Dabei kann vorgesehen sein, dass eine nachträgliche Ausrichtung während der Fahrtbewegung der Arbeitsmaschine nicht weiter erfolgen muss oder lediglich eine geringfügige Korrektur erfolgt. Ebenso ist jedoch auch vorstellbar, dass zusätzlich zu dem Kalibrierungsschritt eine dynamische Anpassung der Ausrichtung vorgesehen ist, die die Überwachungseinheit in Abhängigkeit der derzeitig erfassten Daten vorsieht. In dem Kalibrierungsschritt kann auch das direkte Umfeld der landwirtschaftlichen Arbeitsmaschine erfasst und somit festgestellt werden, ob sich Hindernisse auf dem Feld befinden. Sobald sichergestellt ist, dass das Feld frei von Hindernissen ist, kann die Arbeitsmaschine über das Feld geführt werden, wobei die Überwachungseinheit sodann derart eingestellt werden können, dass ein größeres Umfeld beobachtet werden kann.

Dabei ist gemäß einer vorzugsweisen Ausgestaltung der Erfindung vorgesehen, dass der Kalibrierungsschritt in Abhängigkeit von einem Zustand der landwirtschaftlichen Arbeitsmaschine erfolgt. Der Zustand ist dabei wie im Zusammenhang mit der landwirtschaftlichen Arbeitsmaschine beschrieben zu verstehen. Der hat in aller Regel einen Einfluss auf die Ausrichtung der Überwachungseinheit relativ zu dem von der Arbeitsmaschine zu überfahrenden Untergrund. So ist die Überwachungseinheit bei einem niedrig eingestellten Reifendruck in einem geringeren Abstand zu dem Untergrund angeordnet, als wenn der Reifendruck der Reifen der Arbeitsmaschine hoch ist. Gleiches gilt für den Belastungszustand der Arbeitsmaschine: je mehr die Arbeitsmaschine geladen hat, desto geringer ist typischerweise der Abstand der Überwachungseinheit zum Untergrund. Um diese Veränderungen ausgleichen zu können, ist es deshalb besonders von Vorteil, wenn der Kalibrierungsschritt in Abhängigkeit eines Zustands der landwirtschaftlichen Arbeitsmaschine erfolgt. Auf diese Weise kann die Überwachungseinheit - unabhängig von dem jeweiligen Zustand der Arbeitsmaschine - stets derart ausgerichtet werden, dass eine optimale Erfassung des Umfelds erfolgen kann.

Vorzugsweise ist gemäß einer vorteilhaften Ausgestaltung der Erfindung ein Kalibrierungsschritt vorgesehen, mittels dessen die Überwachungseinheit der landwirtschaftlichen Arbeitsmaschine während der Fahrt kalibriert wird. In einem solchen Fall erfolgt der Kalibrierungsschritt nicht vor Fahrtbeginn, sondern während einer Fahrtbewegung der Arbeitsmaschine, kann mithin stets an die aktuellen Gegebenheiten angepasst werden.

Eine vorzugsweise Ausgestaltung der Erfindung sieht vor, dass die Ausrichtung der Überwachungseinheit in Abhängigkeit eines Lenkwinkels und/oder einer Fahrtrichtung der landwirtschaftlichen Arbeitsmaschine erfolgt. Sobald die Arbeitsmaschine ihre Fahrtrichtung aufgrund einer Lenkbewegung ändert, führt dies bei einer fix an der Arbeitsmaschine angeordneten Überwachungseinheit dazu, dass das Sichtfeld der Überwachungseinheit gleich ausgerichtet bleibt. In veränderter Fahrtrichtung liegende Hindernisse können deshalb erst erkannt werden, wenn diese in das Sichtfeld geraten. Deshalb hat es sich als besonders von Vorteil erwiesen, die Überwachungseinheit entsprechend dem Lenkwinkel auszurichten, sodass stets die unmittelbar vor der Arbeitsmaschine liegende Umgebung erfassbar ist. Dabei kann es besonders von Vorteil sein, wenn die Überwachungseinheit dem Lenkwinkel entsprechend rotiert wird.

Die Erfindung ist nachstehend anhand eines Ausführungsbeispiels, das in den Figuren dargestellt ist, näher erläutert. Es zeigt:
- Fig. 1:: Eine schematische Seitenansicht einer landwirtschaftlichen Arbeitsmaschine gemäß dem Stand der Technik,
- Fig. 2:: Eine schematische Seitenansicht einer erfindungsgemäßen landwirtschaftlichen Arbeitsmaschine,
- Fig. 3:: Eine schematische Frontansicht der landwirtschaftlichen Arbeitsmaschine gemäß dem Stand der Technik aus Figur 1 sowie der erfindungsgemäßen landwirtschaftlichen Arbeitsmaschine aus Figur 2,
- Fig. 4:: Eine schematische Draufsicht einer erfindungsgemäßen landwirtschaftlichen Arbeitsmaschine und

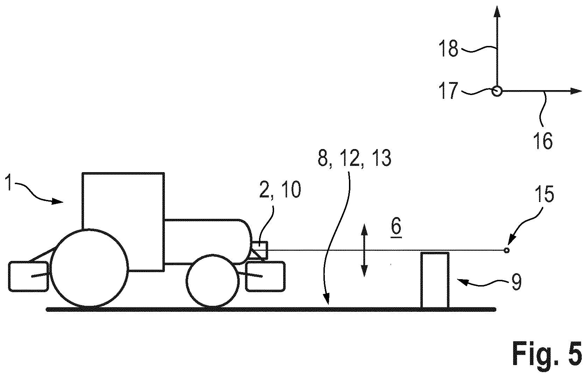

- Fig. 5:: Wie Figur 2, wobei ein Kalibrierungsschritt dargestellt ist.

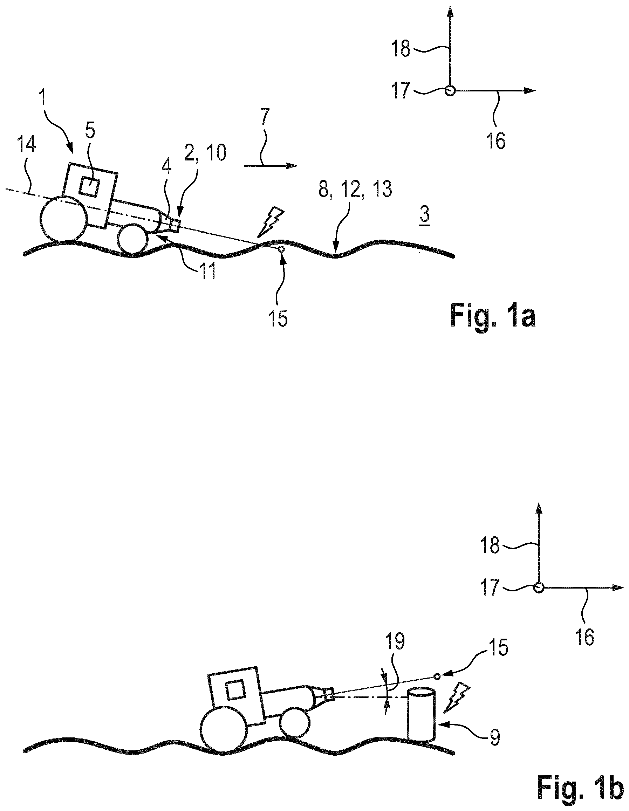

**Figur 1** zeigt eine landwirtschaftliche Arbeitsmaschine **1** gemäß dem Stand der Technik, die ein zu bearbeitendes Feld **8** überfährt, auf dem sich ein Hindernis **9** befindet. Die Arbeitsmaschine **1** umfasst dabei eine Überwachungseinheit **2** in Form eines Kollisionssensor **10** zur Überwachung des zu überfahrenden Felds **8** sowie eine Halteeinheit **4,** die der Überwachungseinheit **2** zugeordnet ist und diese an der Arbeitsmaschine **1** hält. Der Kollisionssensor **10** ist dabei fix, d.h. unbeweglich, an einer Vorderseite **11** der Arbeitsmaschine **1** angeordnet. Der Kollisionssensor **10** erfasst Daten betreffend ein Umfeld **3** der landwirtschaftlichen Arbeitsmaschine **1.** Darüber hinaus weist die Arbeitsmaschine **1** eine Datenverarbeitungseinheit **5** zur Verarbeitung der von der Überwachungseinheit **2** erfassten Daten auf, die in einem Innenraum der Arbeitsmaschine **1** untergebracht ist. Die landwirtschaftliche Arbeitsmaschine **1** kann mittels einer nicht gezeigten Lenkeinheit gesteuert werden.

Mittels der Datenverarbeitungseinheit **5** werden die erfassten Daten derart verarbeitet, das das Hindernis **9,** das sich auf einer Fahrbahn **12** der landwirtschaftlichen Arbeitsmaschine **1** befindet, detektiert werden und somit eine Kollision mit dem Hindernis **9** vermieden werden kann. Eine entsprechende Lenkbewegung der landwirtschaftlichen Arbeitsmaschine **1** zum Ausweichen des Hindernisses soll dabei ebenfalls von der Datenverarbeitungseinheit **5** bestimmt und mittels der Lenkeinheit umgesetzt werden können.

Eine Längsachse **14** der landwirtschaftlichen Arbeitsmaschine **1** bei Vorliegen der selbigen auf einem ebenen Untergrund **13** entspricht dabei einer X-Achse **16** der landwirtschaftlichen Arbeitsmaschine **1.** Senkrecht hierzu und parallel zu dem Untergrund **13** ist eine Y-Achse **17** definiert. In Richtung einer Höhe der landwirtschaftlichen Arbeitsmaschine 1 ist eine Z-Achse **18** definiert.

Beim Überfahren eines wie in **Figur 1a** gezeigten unebenen Untergrunds **13** bewegt sich ein Sichtfeld **15** des Kollisionssensors **10** infolge der fixen Anordnung des Kollisionssensors **10** im Einklang mit der Bewegung der Arbeitsmaschine **1,** was zur Folge hat, dass der Kollisionssensor **10** bei einer infolge einer Unebenheit hervorgerufenen Rotation der Arbeitsmaschine **1** um die Y-Achse, auch Rotation um einen Pitch-Winkel **19,** genannt, die Überwachungseinheit **2** der Arbeitsmaschine **1** die Umgebung nicht vollständig erfassen kann, da das Sichtfeld **15** auf den Untergrund **13** gerichtet ist, wie in **Figur 1a** dargestellt ist. Bei einer wie in der **Figur 1b** ebenfalls dargestellten Rotation der Arbeitsmaschine **1** um den Pitch-Winkel **19** entgegen der vorstehende beschriebenen Drehrichtung führt die fixe Anordnung der Überwachungseinheit **2** dazu, dass das Sichtfeld **15** derart in Richtung der Z-Achse **18** der Arbeitsmaschine **1** verschoben wird, dass das auf dem Untergrund **13** befindliche Hindernis **9** nicht erfasst werden kann.

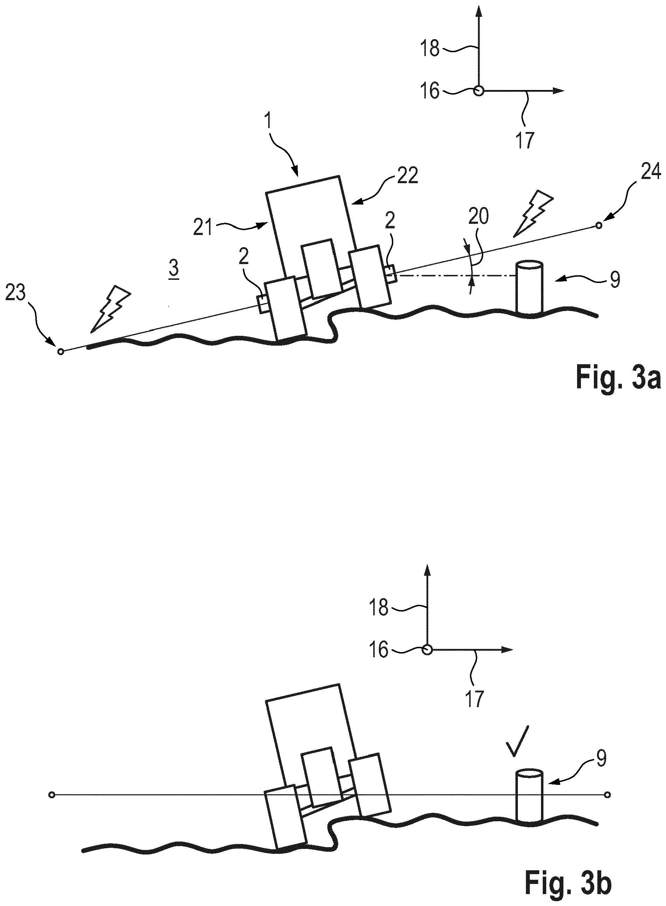

Gleiches gilt für den Fall, in dem die Arbeitsmaschine **1** einen Untergrund **13** überfährt, der Unebenheiten aufweist, die senkrecht zu den in **Figur 1** dargestellten Unebenheiten angeordnet sind, sodass eine Rotation der Arbeitsmaschine **1** um die X-Achse **16** der Arbeitsmaschine **1,** auch Rotation um einen Roll-Winkel **20** genannt, erfolgt. Eine derartige Situation ist in der **Figur 3a****)** gezeigt. Auch in einem solchen Fall führt dies zu einer Rotation des Sichtfelds **23, 24** der Überwachungseinheit **2.** In dem in der **Figur 3a****)** gezeigten Ausführungsbeispiel ist die Überwachungseinheit **2** seitlich an der landwirtschaftlichen Arbeitsmaschine **1** angeordnet, sodass das Umfeld **3** der Arbeitsmaschine **1** seitlich zu dieser erfassbar ist. Infolge der fixen Anordnung der Überwachungseinheit **2** wird bei einer Rotation um den Roll-Winkel **20** bewirkt, dass in dem Sichtfeld **23** auf der einen Seite **21** der landwirtschaftlichen Arbeitsmaschine **1** lediglich der Untergrund **13** erfassbar ist, während das auf der gegenüberliegenden Seite **22** der Arbeitsmaschine **1** befindliche Hindernis **9** aufgrund einer Rotation des Sichtfelds **24** der Überwachungseinheit **2** nicht erfasst werden können.

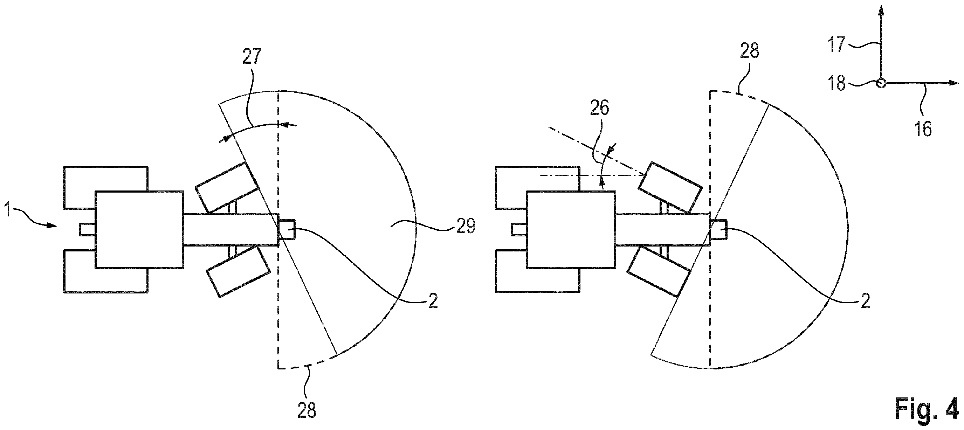

In **Figur 4** ist eine landwirtschaftliche Arbeitsmaschine **1** bei einer Lenkbewegung gezeigt. Erkennbar ist, dass das Sichtfeld **28** einer Überwachungseinheit **2** bei einer fixen Anordnung der Überwachungseinheit **2** stets gleichbleibt, auch während der Lenkbewegung. Das Sichtfeld **28** der Überwachungseinheit **2** ist dabei in der **Figur 4** als gestrichelte Linie dargestellt.

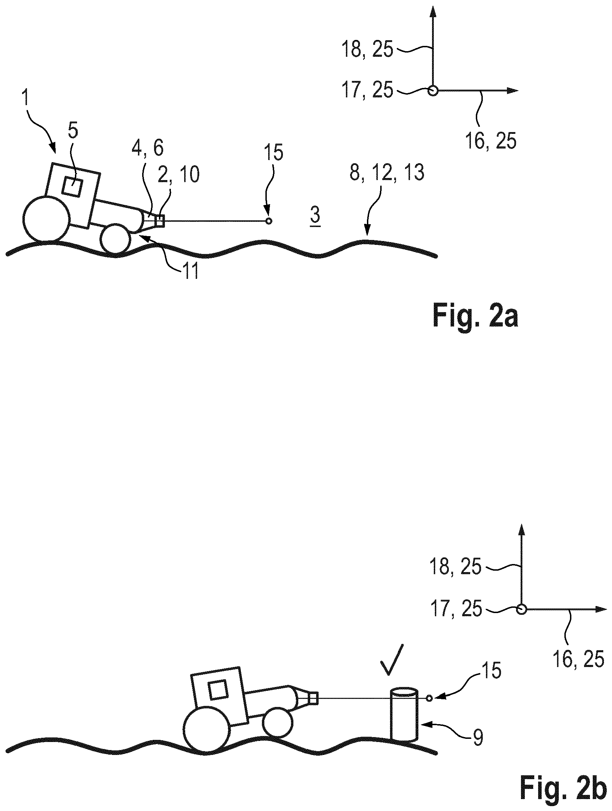

Die erfindungsgemäße landwirtschaftliche Arbeitsmaschine **1,** welche in der **Figur 2** sowie **Figur 3b****)** gezeigt ist, ermöglicht hingegen eine Ausrichtung der Überwachungseinheit **2** in Abhängigkeit von mittels der Überwachungseinheit **2** selbst erfassten Daten betreffend das Umfeld **3** und betreffend den Zustand der Arbeitsmaschine **1.** Die Daten werden dabei mittels der Datenverarbeitungseinheit **5** ausgewertet und eine Soll-Position der Überwachungseinheit **2** bestimmt, in die die Überwachungseinheit **2** überführt werden soll. Die Soll-Position ist dabei insbesondere auf die Beschaffenheit des zu überfahrenden Untergrunds **13** und den Zustand der landwirtschaftlichen Arbeitsmaschine **1** ausgerichtet. Bei einem wie in **Figur 1** gezeigten hügeligen Untergrund **13** führt eine Überfahrt der Arbeitsmaschine **1** über diesen wie eingangs beschrieben zu einer Rotation der Arbeitsmaschine **1** um den Pitch-Winkel **19.** Um dennoch eine optimale Erfassung der Umgebung mittels der Überwachungseinheit **2** zu ermöglichen, muss diese entsprechend ausgerichtet werden. Eine derartige Ausrichtung erfolgt mittels einer Positioniereinheit **6,** die der Überwachungseinheit **2** zugeordnet ist. Die Positioniereinheit **6** umfasst dabei nicht in den Figuren gezeigte Servomotoren, die in diesem Fall eine Rotation der Überwachungseinheit **2** um dem Pitch-Winkel **19** der Arbeitsmaschine **1** ermöglichen, sodass das Sichtfeld **29** der Überwachungseinheit **2** relativ zu dem Untergrund **13** korrigierbar ist. In der in den Figuren gezeigten Ausführung wirkt die Positionierungseinheit **6** zugleich als Halteeinheit **4,** es liegt mithin lediglich ein Bauteil vor, das die Überwachungseinheit **2** zum einen hält und zum anderen ausrichtet. Ebenso ist es jedoch möglich, dass die Positionierungseinheit **6** und die Halteeinheit **4** als zwei voneinander getrennte Teile ausgebildet sind. Mittels der Positioniereinheit **6** ist die Überwachungseinheit **2** der landwirtschaftlichen Arbeitsmaschine **1** in all ihre Freiheitsgrade ausrichtbar.

**Figur 2** zeigt eine erfindungsgemäße landwirtschaftliche Arbeitsmaschine **1,** bei der die Überwachungseinheit **2** dynamisch, d.h. während einer Fahrtbewegung der Arbeitsmaschine **1,** ausrichtbar ist. Bei einer Rotation der Arbeitsmaschine **1** um den Pitch-Winkel **19** erfolgt eine Korrektur der Ausrichtung der Überwachungseinheit **2** derart, dass das Sichtfeld **15** stets so ausgerichtet ist, dass es das Umfeld **3** vollständig erfassen kann. Insbesondere kann auf diese Weise das auf der Fahrbahn **12** befindliche Hindernis **9** erfasst werden. Mittels der Positioniereinheit **6** ist die Überwachungseinheit **2** in alle Raumachsen **25** verdreh- und verschiebbar. Insbesondere ist die Überwachungseinheit **2** um die X-, Y-und Z-Achse **16, 17, 18** der Arbeitsmaschine **1** verdrehbar und entlang dieser translatorisch verschiebbar.

Gleiches gilt bei einer Lenkbewegung der Arbeitsmaschine **1** wie aus der **Figur 4** ersichtlich ist. Die Überwachungseinheit **2** erfasst dabei einen Lenkwinkel **26** der landwirtschaftlichen Arbeitsmaschine. Entsprechend dem Lenkwinkel **26** wird die Überwachungseinheit **2** derart um einen Yaw-Winkel **27** der Arbeitsmaschine **1** rotiert, dass das Sichtfeld **29** auch bei einer Lenkbewegung stets in Richtung der Fahrtrichtung **7** der Arbeitsmaschine **1** ausgerichtet ist, wie durch die mit durchgehender Linie gekennzeichnete Fläche in der **Figur 4** gekennzeichnet ist. Auf diese Weise kann das für die momentane Ausrichtung der landwirtschaftlichen Arbeitsmaschine **1** wesentliche Umfeld **3** erfasst werden. Vorteilhafter Weise könne mithin "tote" Bereiche, die ohne eine dynamische Ausrichtung der Überwachungseinheit **2** nicht erfasst werden würden, minimiert werden.

Des Weiteren ist es mittels der erfindungsgemäßen landwirtschaftlichen Arbeitsmaschine **1** möglich, einen Kalibrierungsschritt vorzunehmen. Mittels des Kalibrierungsschritts kann die Ausrichtung der Überwachungseinheit **2** vor dem Fahrtbeginn der Arbeitsmaschine **1** optimal eingestellt werden. Dabei wird insbesondere der Untergrund **13,** der von der Arbeitsmaschine **1** überfahren werden soll, sowie das Umfeld **3** der landwirtschaftlichen Arbeitsmaschine **1** auf Hindernisse hin überprüft. In Abhängigkeit der erfassten Daten kann dann eine optimale Soll-Position der Überwachungseinheit **2** mittels der Datenverarbeitungseinheit **5** bestimmt und mittels der Positioniereinheit **6** die Überwachungseinheit **2** von ihrer aktuellen Ist-Position in die Soll-Position überführt werden, wobei die dann vorherrschende Ist-Position der Überwachungseinheit **2** während der Fahrt nicht oder lediglich geringfügig korrigiert werden muss.

Beispielsweise eignet sich ein derartiger Kalibrierungsschritt vor Fahrtbeginn, wenn der Untergrund **13** Hanglage aufweist und bereits zu Fahrtbeginn ersichtlich ist, dass die Überwachungsrichtung um den Pitch-Winkel **19** der Arbeitsmaschine **1** rotiert werden muss, um das gesamte Umfeld **3** erfassen zu können. In einem solchen Fall kann es besonders von Vorteil sein, wenn die Korrektur der kalibrierten Ausrichtung lediglich mittels einer kardanischen Aufhängung erfolgt, die die ungewollten Bewegungen der Arbeitsmaschine **1** ausgleicht.

### Bezugszeichenliste

| Landwirtschaftliche Arbeitsmaschine
| Überwachungseinheit
| Umfeld
| Halteeinheit
| Datenverarbeitungseinheit
| Positioniereinheit
| Fahrtrichtung
| Feld
| Hindernis
| Kollisionssensor
| Vorderseite
| Fahrbahn
| Untergrund
| Längsachse
| Sichtfeld
| X-Achse
| Y-Achse
| Z-Achse
| Pitch-Winkel
| Roll-Winkel
| Seite
| Seite
| Sichtfeld
| Sichtfeld
| Raumachse
| Lenkwinkel
| Yaw-Winkel
| Sichtfeld
| Sichtfeld

## Patentansprüche

1. Landwirtschaftliche Arbeitsmaschine (1), umfassend
- mindestens eine Überwachungseinheit (2) zur Erfassung von Daten betreffend ein Umfeld (3) und/oder betreffend einen Zustand der landwirtschaftlichen Arbeitsmaschine,
- mindestens eine der Überwachungseinheit (2) zugeordnete Halteeinheit (4) zur Halterung der Überwachungseinheit (2),
- mindestens eine Datenverarbeitungseinheit (5) zur Verarbeitung der von der Überwachungseinheit (2) erfassten Daten und
- mindestens eine der Überwachungseinheit (2) zugeordnete Positioniereinheit (6) zur Ausrichtung der Überwachungseinheit (2),
**dadurch gekennzeichnet, dass**
mittels der Datenverarbeitungseinheit (5) in Abhängigkeit der mittels der Überwachungseinheit (2) erfassten Daten betreffend das Umfeld (3) und/oder betreffend den Zustand der landwirtschaftlichen Arbeitsmaschine eine Soll-Position der Überwachungseinheit (2) bestimmbar ist,
wobei die Überwachungseinheit (2) mittels der Positioniereinheit (6) derart ausrichtbar ist, dass sie von einer Ist-Position in die Soll-Position überführbar ist.

2. Landwirtschaftliche Arbeitsmaschine (1) nach Anspruch 1, **dadurch gekennzeichnet, dass** die Überwachungseinheit (2) einen Lidarsensor, einen Radarsensor, einen Ultraschallsensor und/oder eine Kamera umfasst.

3. Landwirtschaftliche Arbeitsmaschine (1) nach Anspruch 1 oder 2, **dadurch gekennzeichnet, dass** die Positioniereinheit (6) eine kardanische Aufhängung umfasst.

4. Landwirtschaftliche Arbeitsmaschine (1) nach einem der vorhergehenden Ansprüche, **dadurch gekennzeichnet, dass** die Überwachungseinheit (2) mittels der Positioniereinheit (6) entlang mindestens einer Raumachse (25) bewegbar ist.

5. Landwirtschaftliche Arbeitsmaschine (1) nach einem der vorhergehenden Ansprüche, **dadurch gekennzeichnet, dass** die Überwachungseinheit (2) mittels der Positioniereinheit (6) um mindestens eine Raumachse (25) rotierbar ist.

6. Landwirtschaftliche Arbeitsmaschine (1) nach einem der vorhergehenden Ansprüche, **dadurch gekennzeichnet, dass** die Überwachungseinheit (2) in all ihren Freiheitsgraden ausrichtbar ist.

7. Landwirtschaftliche Arbeitsmaschine (1) nach einem der vorhergehenden Ansprüche, **dadurch gekennzeichnet, dass** die Positioniereinheit (6) mindestens einen Servomotor und/oder mindestens eine Zahnstange umfasst.

8. Landwirtschaftliche Arbeitsmaschine (1) nach einem der vorhergehenden Ansprüche, **dadurch gekennzeichnet, dass** die Überwachungseinheit (2) während einer Fahrtbewegung der landwirtschaftlichen Arbeitsmaschine ausrichtbar ist.

9. Landwirtschaftliche Arbeitsmaschine (1) nach einem der vorhergehenden Ansprüche, **gekennzeichnet durch** eine Lenkeinheit, mittels der die landwirtschaftliche Arbeitsmaschine (1) in Abhängigkeit der von der Überwachungseinheit (2) erfassten Daten autonom steuerbar ist.

10. Verfahren zur Ausrichtung einer Überwachungseinheit (2) einer landwirtschaftlichen Arbeitsmaschine, umfassend die folgenden Verfahrensschritte:
a. Daten betreffend ein Umfeld (3) und/oder betreffend einen Zustand der landwirtschaftlichen Arbeitsmaschine werden von einer Überwachungseinheit (2) erfasst;
b. Die Daten werden an eine Datenverarbeitungseinheit (5) der landwirtschaftlichen Arbeitsmaschine übermittelt;
**gekennzeichnet durch** die folgenden Verfahrensschritte:
c. In Abhängigkeit der Daten wird mittels der Datenverarbeitungseinheit (5) eine Soll-Position der Überwachungseinheit (2) bestimmt;
d. Die Überwachungseinheit (2) wird mittels einer Positioniereinheit (6) von einer Ist-Position in die Soll-Position überführt.

11. Verfahren nach Anspruch 10, **gekennzeichnet durch** einen Kalibrierungsschritt, mittels dessen die Überwachungseinheit (2) in Abhängigkeit von einem Zustand der landwirtschaftlichen Arbeitsmaschine kalibriert wird.

12. Verfahren nach Anspruch 10 oder 11, **gekennzeichnet durch** einen Kalibrierungsschritt, mittels dessen die Überwachungseinheit (2) während einer Fahrt der landwirtschaftlichen Arbeitsmaschine kalibriert wird.

13. Verfahren nach einem der Ansprüche 10 bis 12, **gekennzeichnet durch** einen Kalibrierungsschritt, mittels dessen die Überwachungseinheit (2) vor einem Fahrtbeginn der landwirtschaftlichen Arbeitsmaschine kalibriert wird.

14. Verfahren nach einem der Ansprüche 10 bis 13, **dadurch gekennzeichnet, dass** die Ausrichtung der Überwachungseinheit (2) in Abhängigkeit eines Lenkwinkels (26) und/oder einer Fahrtrichtung (7) der landwirtschaftlichen Arbeitsmaschine erfolgt.

## Claims

1. An agricultural working machine (1), comprising
- at least one monitoring unit (2) for the detection of data relating to a surrounding area (3) and/or relating to a state of the agricultural working machine,
- at least one retaining unit (4) for retaining the monitoring unit (2) associated with the monitoring unit (2),
- at least one data processing unit (5) for processing the data detected by the monitoring unit (2), and
- at least one positioning unit (6) associated with the monitoring unit (2) for the orientation of the monitoring unit (2),
**characterized in that**
by means of the data processing unit (5), a nominal position of the monitoring unit (2) can be determined as a function of the data relating to the surrounding area (3) and/or relating to the state of the agricultural machine detected by means of the monitoring unit (2),
wherein the monitoring unit (2) can be orientated by means of the positioning unit (6) in a manner such that it can be transposed from an actual position into the nominal position.

2. The agricultural working machine (1) according to claim 1, **characterized in that** the monitoring unit (2) comprises a lidar sensor, a radar sensor, an ultrasonic sensor and/or a camera.

3. The agricultural working machine (1) according to claim 1 or claim 2, **characterized in that** the positioning unit (6) comprises a gimballed suspension.

4. The agricultural working machine (1) according to one of the preceding claims, **characterized in that** the monitoring unit (2) can be moved along at least one axis in space (25) by means of the positioning unit (6).

5. The agricultural working machine (1) according to one of the preceding claims, **characterized in that** the monitoring unit (2) can be rotated about at least one axis in space (25) by means of the positioning unit (6).

6. The agricultural working machine (1) according to one of the preceding claims, **characterized in that** the monitoring unit (2) can be orientated in all of its degrees of freedom.

7. The agricultural working machine (1) according to one of the preceding claims, **characterized in that** the positioning unit (6) comprises at least one servomotor and/or at least one toothed rack.

8. The agricultural working machine (1) according to one of the preceding claims, **characterized in that** the monitoring unit (2) can be orientated during a travelling movement of the agricultural working machine.

9. The agricultural working machine (1) according to one of the preceding claims, **characterized by** a steering unit by means of which the agricultural working machine (1) can be steered autonomously as a function of the data detected by the monitoring unit (2).

10. A method for orientating a monitoring unit (2) of an agricultural working machine, comprising the following steps of the method:
a. data relating to a surrounding area (3) and/or relating to a state of the agricultural working machine are detected by a monitoring unit (2);
b. the data are transmitted to a data processing unit (5) of the agricultural working machine;
**characterized by** the following steps of the method:
c. a nominal position of the monitoring unit (2) is determined by means of the data processing unit (5) as a function of the data;
d. the monitoring unit (2) is transposed by means of the positioning unit (6) from an actual position into the nominal position.

11. The method according to claim 10, **characterized by** a calibration step by means of which the monitoring unit (2) is calibrated as a function of a state of the agricultural working machine.

12. The method according to claim 10 or claim 11, **characterized by** a calibration step by means of which the monitoring unit (2) is calibrated during a run of the agricultural working machine.

13. The method according to one of claims 10 to 12, **characterized by** a calibration step by means of which the monitoring unit (2) is calibrated before the start of a run of the agricultural working machine.

14. The method according to one of claims 10 to 13, **characterized in that** the orientation of the monitoring unit (2) is carried out as a function of a steering angle (26) and/or of a direction of travel (7) of the agricultural working machine.

## Revendications

1. Machine de travail agricole (1), comprenant
- au moins une unité de surveillance (2) destinée à recueillir des données concernant un milieu environnant (3) et/ou concernant un état de la machine de travail agricole,
- au moins une unité de support (4) associée à l'unité de surveillance (2) et destinée à tenir l'unité de surveillance (2),
- au moins une unité de traitement de données (5) destinée au traitement des données recueillies par l'unité de surveillance (2), et
- au moins une unité de positionnement (8) associée à l'unité de surveillance (2) et destinée à l'alignement de l'unité de surveillance (2),
**caractérisée en ce que**
l'unité de traitement de données (5) permet de déterminer une position de consigne de l'unité de surveillance (2), en fonction des données recueillies par l'unité de surveillance (2) concernant le milieu environnant (3) et/ou concernant l'état de la machine agricole,
l'unité de surveillance (2) pouvant être alignée à l'aide de l'unité de positionnement (6) de manière à pouvoir être amenée d'une position réelle à la position de consigne.

2. Machine de travail agricole (1) selon la revendication 1, **caractérisée en ce que** l'unité de surveillance (2) comprend un capteur Lidar, un capteur radar, un capteur à ultrasons et/ou une caméra.

3. Machine de travail agricole (1) selon la revendication 1 ou 2, **caractérisée en ce que** l'unité de positionnement (6) comprend une suspension à la Cardan.

4. Machine de travail agricole (1) selon l'une des revendications précédentes, **caractérisée en ce que** l'unité de surveillance (2) peut être déplacée au moyen de l'unité de positionnement (6), le long d'au moins un axe dans l'espace (25).

5. Machine de travail agricole (1) selon l'une des revendications précédentes, **caractérisée en ce que** l'unité de surveillance (2) peut être mise en rotation au moyen de l'unité de positionnement (6), autour d'au moins un axe dans l'espace (25).

6. Machine de travail agricole (1) selon l'une des revendications précédentes, **caractérisée en ce que** l'unité de surveillance (2) peut être orientée suivant l'ensemble de ses degrés de liberté.

7. Machine de travail agricole (1) selon l'une des revendications précédentes, **caractérisée en ce que** l'unité de positionnement (6) comprend au moins un servomoteur et/ou au moins une crémaillère.

8. Machine de travail agricole (1) selon l'une des revendications précédentes, **caractérisée en ce que** l'unité de surveillance (2) peut être alignée au cours d'un mouvement de déplacement de la machine agricole.

9. Machine de travail agricole (1) selon l'une des revendications précédentes, **caractérisée en ce qu'**elle présente une unité de guidage qui permet de commander la machine agricole (1) de façon autonome en fonction des données recueillies par l'unité de surveillance (2).

10. Procédé d'alignement d'une unité de surveillance (2) d'une machine de travail agricole, comprenant les étapes suivantes :
a. des données concernant un milieu ambiant (3) et/ou concernant un état de la machine agricole sont recueillies par une unité de surveillance (2) ;
b. les données sont transmises à une unité de traitement de données (5) de la machine agricole ;
**caractérisé en ce qu'**il présente les étapes de procédé suivantes :
c. en fonction des données, une position de consigne de l'unité de surveillance (2) est déterminée à l'aide de l'unité de traitement de données (5) ;
d. l'unité de surveillance (2) est amenée d'une position réelle dans la position de consigne, au moyen d'une unité de positionnement (6).

11. Procédé selon la revendication 10, **caractérisé en ce qu'**il comporte une étape de calibrage, au moyen de laquelle l'unité de surveillance (2) est calibrée en fonction d'un état de la machine agricole.

12. Procédé selon la revendication 10 ou 11, **caractérisé en ce qu'**il comporte une étape de calibrage, au moyen de laquelle l'unité de surveillance (2) est calibrée pendant un déplacement de la machine agricole.

13. Procédé selon l'une des revendications 10 à 12, **caractérisé en ce qu'**il comporte une étape de calibrage, au moyen de laquelle l'unité de surveillance (2) est calibrée avant le début d'un déplacement de la machine agricole.

14. Procédé selon l'une des revendications 10 à 13, **caractérisé en ce que** l'alignement de l'unité de surveillance (2) est réalisé en fonction d'un angle de braquage (26) et/ou d'une direction de déplacement (7) de la machine agricole.
